# EUROPEAN PATENT APPLICATION

(11) **EP 4 489 173 A1**
(43) Date of publication of application: **08.01.2025**
(21) Application number: 23759934.5
(22) Date of filing: 20.02.2023
(51) Int. Cl.: H01M 10/0587

(54) **NON-AQUEOUS ELECTROLYTE SECONDARY BATTERY**

(30) Priority: 28.02.2022 JP 2022029874
(71) Applicant: Panasonic Intellectual Property Management Co., Ltd., Kadoma-shi, Osaka 571-0057 (JP)
(72) Inventor: KANO, Akira, Kadoma-shi, Osaka 571-0057 (JP); INOUE, Takahiro, Kadoma-shi, Osaka 571-0057 (JP)
(74) Representative: Novagraaf International SA
(86) International application number: PCT/JP2023/006055
(87) International publication number: WO 2023/162933

(57) **Abstract**

Disclosed is a non-aqueous electrolyte secondary battery including: a wound electrode group 10 in which a positive electrode 11 and a negative electrode 12 are spirally wound in a winding direction with a separator 13 interposed therebetween; and a non-aqueous electrolyte. The negative electrode 12 includes a reverse winding portion 12A at an end of the wound electrode group 10 at a starting side of winding, the reverse winding portion 12A being a portion that does not oppose the positive electrode 11 and is spirally wound in a direction opposite to the winding direction.

## Description

### [Technical Field]

The present invention relates to a non-aqueous electrolyte secondary battery.

### [Background Art]

Non-aqueous electrolyte secondary batteries have a high voltage and a high energy density, and are therefore expected to be used in small-sized consumer applications, power storage devices, and power supplies for electric vehicles. A lithium ion secondary battery in which an Si-based material that contains silicon that can be alloyed with lithium is used as a negative electrode active material, and a lithium secondary battery (lithium metal secondary battery), are regarded as promising secondary batteries because they have a large theoretical capacity density and a high energy density can be easily obtained. In the lithium secondary battery, a lithium metal deposits on the negative electrode during charge and the lithium metal dissolves into the non-aqueous electrolyte during discharge.

On the other hand, in the lithium ion secondary battery in which the Si-based material is used as the negative electrode active material or the lithium secondary battery described above, the negative electrode expands greatly during charge. Accordingly, the expanded negative electrode presses the positive electrode, causing a local distortion or deformation of the electrode plate around the pressed area, causing an internal short circuit or a reduction in the battery performance.

Patent Literature 1 discloses a non-aqueous electrolyte secondary battery that includes a wound electrode assembly formed by spirally winding a positive electrode and a negative electrode in which a negative electrode material mixture layer is formed on a negative electrode core, with a separator interposed between the positive electrode and the negative electrode. The negative electrode includes a non-opposing portion that is formed by spirally winding the negative electrode together with the separator 1.25 laps or more from an inner end of the wound electrode assembly in the winding direction so as not to oppose the positive electrode. The non-opposing portion includes a negative electrode material mixture layer-forming portion in which a negative electrode material mixture layer is formed on at least one side continuously from an outer end to an inner side in the winding direction, and the negative electrode material mixture layer-forming portion is spirally wound 0.75 laps or more. Patent Literature 1 discloses that, with this configuration, a gas discharge path is ensured due to the presence of the negative electrode material mixture layer-forming portion, and it is therefore possible to efficiently discharge a high-temperature and high-pressure gas generated in the battery when the battery catches fire.

Patent Literature 2 discloses a secondary battery that includes a wound assembly formed by stacking and spirally winding a positive electrode and a negative electrode, the positive electrode including a positive electrode current collector that has a pair of opposing surfaces and a positive electrode active material layer that is formed on each of the opposing surfaces, and the negative electrode including a negative electrode current collector that has a pair of opposing surfaces and a negative electrode active material layer that is formed on each of the opposing surfaces. The negative electrode includes a double-side opposing region in which the negative electrode active material layer and the positive electrode active material layer oppose each other on both an outer circumferential side surface and an inner circumferential side surface of the negative electrode, and the negative electrode also includes, on the winding center side, an outer circumferential surface opposing region in which the negative electrode active material layer and the positive electrode active material layer oppose each other only on the outer circumferential surface side, the outer circumferential surface opposing region being spirally wound 2 laps or more and 3.25 laps or less. Patent Literature 2 discloses that, with this configuration, the energy density on the winding center side appropriately decreases, which can mitigate the stress generated by absorption of an electrode reactant and can also mitigate a local distortion, and thus cycle characteristics can be improved.

### [Citation List]

### [Patent Literatures]

[PTL 1] Japanese Re-Publication of WO 2018-116876
[PTL 2] Laid-Open Japanese Patent Publication No. 2006-24464

### [Summary of Invention]

### [Technical Problem]

The present invention implements a non-aqueous electrolyte secondary battery in which an electrode deformation caused by a negative electrode expansion is suppressed, and that has a high level of cycle characteristics.

### [Solution to Problem]

One aspect of the present invention relates to a non-aqueous electrolyte secondary battery including: a wound electrode group in which a positive electrode and a negative electrode are spirally wound in a winding direction with a separator interposed therebetween; and a non-aqueous electrolyte, wherein the negative electrode includes a reverse winding portion at an end portion of the wound electrode group at sa tarting side of winding, the reverse winding portion being a portion that does not oppose the positive electrode and is spirally wound in a direction opposite to the winding direction.

### [Advantageous Effects of Invention]

With the non-aqueous electrolyte secondary battery according to the present disclosure, an electrode deformation caused by a negative electrode expansion is suppressed, and a high level of cycle characteristics can be achieved.

Novel features of the present invention are set forth in the appended claims. However, the present invention will be well understood from the following detailed description of the present invention with reference to the drawings, in terms of both the configuration and the content, together with other objects and features of the present invention.

### [Brief Description of Drawings]

[FIG. 1] FIG. 1 is an overall vertical cross-sectional view of a non-aqueous electrolyte secondary battery according to an embodiment of the present disclosure.
[FIG. 2] FIG. 2 is a schematic cross-sectional view of a wound electrode group used in the non-aqueous electrolyte secondary battery according to the embodiment of the present disclosure, taken along a plane perpendicular to the winding axis, showing an end portion of the wound electrode group at a starting side of winding.

### [Description of Embodiment]

Hereinafter, an embodiment of the present disclosure will be described by way of examples. However, the present disclosure is not limited to the examples described below. In the following description, specific numerical values, materials, and the like may be shown as examples. However, other numerical values, materials, and the like may also be used as long as the advantageous effects of the present disclosure can be obtained. As constituent elements other than the characteristic features of the present disclosure, known secondary battery constituent elements may be used. In the specification of the present application, the expression "a range of a numerical value A to a numerical value B" encompasses that the range includes the numerical value A and the numerical value B, and can also be interpreted as "a numerical value A or more and a numerical value B or less". In the following description, lower and upper limits of numerical values of specific physical properties, conditions, and the like will be shown. The lower limits and the upper limits shown below can be combined in any way as long as the lower limits are not greater than or equal to the upper limits. In the case where a plurality of materials are shown as examples, only one material may be selected from among the plurality of materials and used, or a combination of two or more may be selected from among the plurality of materials and used.

Also, the present disclosure encompasses a combination of features recited in any two or more claims arbitrarily selected from among the plurality of claims that are set forth in the appended claims. In other words, unless a technical contradiction arises, it is possible to combine features recited in any two or more claims arbitrarily selected from among the plurality of claims that are set forth in the appended claims.

A non-aqueous electrolyte secondary battery according to an embodiment of the present disclosure includes: a wound electrode group in which a positive electrode and a negative electrode are spirally wound in a winding direction with a separator interposed therebetween; and a non-aqueous electrolyte. The negative electrode includes a reverse winding portion at an end portion of the wound electrode group at a starting side of winding, the reverse winding portion being a portion that does not oppose the positive electrode and is spirally wound in a direction opposite to the winding direction.

Usually, a wound electrode group is formed by placing a positive electrode and a negative electrode on top of each other with a separator interposed therebetween, and spirally winding the positive electrode and the negative electrode with the separator interposed therebetween around a predetermined winding core. Each of the positive electrode, the negative electrode, and the separator may be, for example, an elongated sheet. The winding core is usually removed from the center of the electrode group.

In contrast, in the non-aqueous electrolyte secondary battery according to the embodiment of the present disclosure, the wound electrode group is formed by spirally winding a predetermined length of the negative electrode around a winding core in a direction opposite to the winding direction, thereafter placing the positive electrode on the negative electrode with the separator interposed therebetween, and spirally winding them in the winding direction.

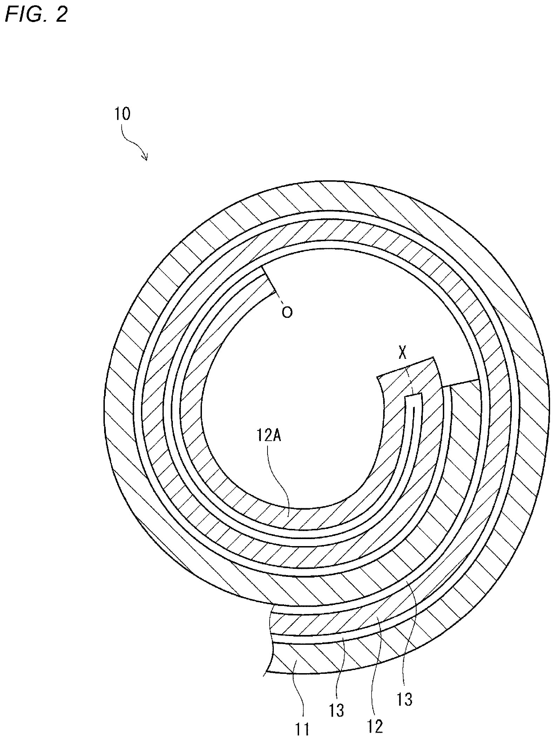

In this case, when the wound electrode group is viewed from above (in a direction perpendicular to the winding axis), the negative electrode is folded back on the winding start side (inner circumferential side) of the wound electrode group. From a folded-back position X, two negative electrode portions extend in the winding direction. One of the two negative electrode portions that extends from the folded-back position X in the winding direction along the inner circumferential side corresponds to the reverse winding portion, and the other negative electrode portion extends to the winding end side (outer circumferential side) of the wound electrode group in the winding direction (see FIG. 2). The reverse winding portion is wound in a reverse manner in a direction opposite to the winding direction when viewed from a winding start position O of the wound electrode group.

When the negative electrode expands due to charge, a stress is applied to an inner circumferential end portion of the negative electrode positioned at the starting side of winding, to stretch the inner circumferential end portion in the circumferential direction. As a result of the inner circumferential end portion being stretched, the stretched inner circumferential end portion may penetrate into the positive electrode on the outer circumference, causing an internal short circuit. Also, as a result of the inner circumferential end portion being stretched, buckling deformation of the wound electrode group may be facilitated.

However, due to the reverse winding portion being formed by folding back the negative electrode at the end portion of the negative electrode at the winding start side, stretching of the end portion at the winding start side is suppressed. As a result, the occurrence of an internal short circuit caused by the stretching of the end portion is suppressed. In addition, deformation of the wound electrode group such as buckling deformation is suppressed. Also, due to the presence of the folded-back portion, the strength of the wound electrode group on the inner circumferential side is increased, which also contributes to suppression of the deformation of the wound electrode group. Accordingly, because the electrode deformation caused by expansion of the negative electrode is suppressed, a high level of cycle characteristics can be achieved.

From the viewpoint of suppressing stretching of the end portion of the negative electrode at the winding start side, it is sufficient that the reverse winding portion is spirally wound 0.5 laps or more in the direction opposite to the winding direction. The reverse winding portion is a portion that does not oppose the positive electrode and does not contribute to the capacity. From the viewpoint of maintaining a high capacity, it is sufficient that the reverse winding portion is spirally wound 1.25laps or less in the direction opposite to the winding direction.

The length of the reverse winding portion, or in other words, the number of laps that corresponds to the length of the reverse winding portion may be evaluated in the following manner.

The length of the reverse winding portion is determined by acquiring an image of a cross section of a surface of a wound electrode group perpendicular to the winding axis through X-ray photography, the wound electrode group being taken out from a discharged battery, and subjecting the acquired cross-sectional image to image analysis. In the cross-sectional image, the area of a region S is determined, the region S being a region that is located on the inner side of the wound electrode group and is occupied by none of the negative electrode, the positive electrode, or the separator. Then, the diameter of a circle that has an area equal to the area of the region S is defined as inner diameter r of the wound electrode group. However, there may be a case where a winding core connection portion that protrudes toward the center axis of the wound electrode group is left on an inner circumferential surface of the wound electrode group. When calculating the inner diameter r, a region that is occupied by the protruding portion described above is added to the region S, without the region being regarded as a region occupied by the wound electrode group.

Through the image analysis, the folded-back position X of the negative electrode is identified, and a length l of the reverse winding portion (excluding the protruding portion) is determined to derive n = l/πr. Here, it can be said that the reverse winding portion is spirally wound in the direction opposite to the winding direction, with a length that corresponds to the number n of laps of spiral winding, n is 0.5 or more and 1.25 or less.

The present invention is not limited to the configurations of the positive electrode, the negative electrode, and the non-aqueous electrolyte, and is effectively used in a non-aqueous electrolyte secondary battery whose negative electrode repeatedly expands and contracts due to charge and discharge and in which a wound electrode group is used. The non-aqueous electrolyte secondary battery may be, for example, a lithium ion battery in which an active material that absorbs lithium ions during charge and desorbs the lithium ions during discharge is used in the negative electrode, or a lithium secondary battery (also called a lithium metal secondary battery) in which a lithium metal deposits on the negative electrode during charge and the lithium metal dissolves into the non-aqueous electrolyte during discharge. In the lithium secondary battery, the negative electrode includes at least a negative electrode current collector, and the lithium metal deposits directly or indirectly on the negative electrode current collector.

Here, a negative electrode expansion rate is defined as a ratio T1/T0 that is a ratio of a negative electrode thickness T1 in a state in which SOC (State of Charge) is 100% to a negative electrode thickness T0 in a state in which SOC is 0%. The negative electrode thickness is determined by measuring thickness at arbitrarily selected 10 different points or more of a negative electrode taken out from a battery in a discharged state and a charged state, and averaging the measured values.

The state in which SOC is 100% refers to a state in which a battery is charged at a predetermined current value (for example, 0.1 It) to a predetermined end-of-charge voltage that corresponds to a rated capacity C. The state in which SOC is 0% refers to a state in which the battery is discharged at a predetermined current value (for example, 0.1 It) from the state in which SOC is 100% to a predetermined end-of-discharge voltage, and also a state in which the amount of electricity that corresponds to the rated capacity C is discharged from the state in which SOC is 100%. Here, "It" represents hour rate. In the case where the amount of electricity that corresponds to the rated capacity C (mAh) is allowed to flow for hour t (h), current value I (mA) at hour rate t is represented by C/t.

The negative electrode expansion rate may be 108% or more (T1/T0 ≥ 1.08). With the non-aqueous electrolyte secondary battery according to the embodiment of the present disclosure, even when the negative electrode has such an expansion rate, by forming the reverse winding portion, the electrode deformation caused by expansion of the negative electrode is suppressed, and a high level of cycle characteristics can be achieved.

For example, in a lithium ion secondary battery in which an Si-based material is used as a negative electrode active material that absorbs lithium ions, the negative electrode expansion rate may take a high value as high as 120% or more (T1/T0 ≥ 1.2). However, in the non-aqueous electrolyte secondary battery according to the embodiment of the present disclosure, even when the negative electrode has such a high expansion rate, by forming the reverse winding portion, the electrode deformation caused by expansion of the negative electrode is suppressed, and a high level of cycle characteristics can be achieved.

Also, for example, in a lithium secondary battery (lithium metal secondary battery) in which a lithium metal deposits on the negative electrode during charge and the lithium metal dissolves into the non-aqueous electrolyte during discharge, the negative electrode expansion rate may take a very high value as high as 140% or more (T1/T0 ≥ 1.4). However, in the non-aqueous electrolyte secondary battery according to the embodiment of the present disclosure, by forming the reverse winding portion, even when the negative electrode has such a very high expansion rate, the electrode deformation caused by expansion of the negative electrode is suppressed, and a high level of cycle characteristics can be achieved.

The inner diameter r of the wound electrode group may be 5 mm or less. The inner diameter r is calculated based on the method described above through image analysis of a cross-sectional image of the wound electrode group. When the inner diameter r is 5 mm or less, the curvature of the negative electrode on the inner circumferential side of the wound electrode group is large, and thus an internal short circuit or a deformation of the wound electrode group caused by the end portion at winding start side being stretched by expansion of the negative electrode is likely to occur. However, in the non-aqueous electrolyte secondary battery according to the embodiment of the present disclosure, by forming the reverse winding portion, even when the wound electrode group has a small inner diameter r as small as 5 mm or less, the electrode deformation caused by expansion of the negative electrode is suppressed, and a high level of cycle characteristics can be achieved.

The inner diameter r of the wound electrode group may be 2.5 mm or less. When the inner diameter r is 2.5 mm or less, the curvature of the negative electrode on the inner circumferential side of the wound electrode group is particularly large, and thus an internal short circuit or a deformation of the wound electrode group caused by the end portion at winding start side being stretched occurs remarkably. However, in the non-aqueous electrolyte secondary battery according to the embodiment of the present disclosure, by forming the reverse winding portion, even when the wound electrode group has a very small inner diameter r as described above, the electrode deformation caused by expansion of the negative electrode is suppressed, and a high level of cycle characteristics can be achieved.

The non-aqueous electrolyte battery may have an outer diameter R of 3 mm or more and 6.5 mm or less, and a height H of 15 mm or more and 65 mm or less. The outer diameter R may be 3 mm to 5.5 mm. The height H may be 15 to 45 mm. The outer diameter R of the lithium secondary battery refers to the maximum outer diameter of a battery case of the battery (assembled battery). Likewise, the height H of the lithium secondary battery refers to the height of the assembled battery, which is the distance from a bottom surface (an outer bottom surface of the battery case) of the battery to a top surface (a top surface of a sealing member) of the battery.

When the outer diameter R is small, the inner diameter r of the wound electrode group also becomes small in proportion to the outer diameter R. When the outer diameter R is 3 mm to 6.5 mm, to obtain a high capacity, the inner diameter r is 5 mm or less, or may be 2.5 mm or less in some cases. A non-aqueous electrolyte secondary battery that has a small outer diameter R as described above is also called "pin-type battery". The non-aqueous electrolyte secondary battery according to the embodiment of the present disclosure is effectively used particularly in a pin-type battery.

Hereinafter, the constituent elements of the non-aqueous electrolyte secondary battery will be described specifically by taking a lithium secondary battery (lithium metal secondary battery) as an example.

### (Negative Electrode)

The negative electrode includes at least a negative electrode current collector. A lithium metal deposits on a surface of the negative electrode during charge. More specifically, lithium ions contained in the non-aqueous electrolyte receive electrons on the negative electrode and are converted to a lithium metal during charge, and the lithium metal deposits on the surface of the negative electrode. The lithium metal deposited on the surface of the negative electrode dissolves into the non-aqueous electrolyte in the form of lithium ions during discharge. The lithium ions contained in the non-aqueous electrolyte may be either one or both of those derived from a lithium salt added to the non-aqueous electrolyte and those supplied from a positive electrode active material during charge.

The negative electrode may include a negative electrode current collector and a sheet-like lithium metal or lithium alloy that is closely attached to a surface of the negative electrode current collector. That is, an underlying layer that contains a lithium metal may be formed in advance on the negative electrode current collector. The lithium alloy may contain, in addition to lithium, an element such as aluminum, magnesium, indium, or zinc. By forming an underlying layer that contains a lithium metal to cause the lithium metal to deposit on the underlying layer during charge, it is possible to suppress deposition of the lithium metal in the form of dendrites. The thickness of the underlying layer that contains a lithium metal may be, but is not particularly limited to, for example, 5 µm to 25 µm.

The negative electrode may include a lithium ion absorbing layer (a layer that exhibits a capacity as a result of the negative electrode active material (graphite or the like) absorbing and desorbing lithium ions) that is supported on the negative electrode current collector. In this case as well, the open circuit potential of the negative electrode when the battery is in a fully charged state may be 70 mV or less relative to the lithium metal (dissolution deposition potential of lithium). When the open circuit potential of the negative electrode when the battery is in a fully charged state is 70 mV or less relative to the lithium metal, the lithium metal is present on a surface of the lithium ion absorbing layer when the battery is in a fully charged state.

The lithium ion absorbing layer is obtained by forming a negative electrode material mixture that contains a negative electrode active material into a layer. The negative electrode material mixture may contain, in addition to the negative electrode active material, a binder, a thickener, a conductive material, and the like.

Examples of the negative electrode active material include a carbonaceous material, an Si-containing material, an Sn-containing material, and the like. The negative electrode may contain one negative electrode active material, or a combination of two or more negative electrode active materials. Examples of the carbonaceous material include graphite, graphitizable carbon (soft carbon), and non-graphitizable carbon (hard carbon).

The conductive material may be, for example, a carbon material. Examples of the carbon material include carbon black, acetylene black, ketjen black, carbon nanotube, graphite, and the like.

Examples of the binder include a fluorocarbon resin, polyacrylonitrile, a polyimide resin, an acrylic resin, a polyolefin resin, a rubbery polymer, and the like. Examples of the fluorocarbon resin include polytetrafluoroethylene, polyvinylidene fluoride, and the like.

The negative electrode current collector may be made of a conductive sheet. As the conductive sheet, a foil, a film, or the like is used.

As the material of the negative electrode current collector (conductive sheet), a conductive material other than lithium metals and lithium alloys may be used. The conductive material may be a metal material such as a metal or an alloy. The conductive material is preferably a material that is unreactable with lithium. More specifically, it is preferable to use a material that does not form an alloy or an intermetallic compound with lithium. Examples of the conductive material include copper (Cu), nickel (Ni), iron (Fe), an alloy that contain any of these metal elements, and graphite whose basal plane is preferentially exposed. Examples of the alloy include a copper alloy, stainless steel (SUS), and the like. Out of these, it is preferable to use copper and/or a copper alloy that has high conductivity.

The thickness of the negative electrode current collector is, but is not particularly limited to, for example, 5 µm or more and 300 µm or less.

### (Positive Electrode)

The positive electrode includes, for example, a positive electrode current collector and a positive electrode material mixture layer that is supported on the positive electrode current collector. The positive electrode material mixture layer contains, for example, a positive electrode active material, a conductive material, and a binder. The positive electrode material mixture layer may be formed on only one side or both sides of the positive electrode current collector. The positive electrode can be obtained by, for example, applying a positive electrode material mixture slurry that contains a positive electrode active material, a conductive material, and a binder on both sides of a positive electrode current collector, drying the coating film, and then rolling the whole.

The positive electrode active material is a material that absorbs and desorbs lithium ions. Examples of the positive electrode active material include a lithium-containing transition metal oxide, a transition metal fluoride, a polyanion, a fluorinated polyanion, a transition metal sulfide, and the like. Out of these, it is preferable to use a lithium-containing transition metal oxide because it has low production cost and exhibits a high average discharge voltage.

The lithium contained in the lithium-containing transition metal oxide is desorbed from the positive electrode during charge in the form of lithium ions, and deposits on the negative electrode or the negative electrode current collector in the form of a lithium metal. During discharge, the lithium metal dissolves from the negative electrode to desorb lithium ions, and then the lithium ions are absorbed by a composite oxide contained in the positive electrode. That is, the lithium ions involved in charge and discharge are basically derived from a solute contained in the non-aqueous electrolyte and the positive electrode active material.

Examples of a transition metal element that can be contained in the lithium-containing transition metal oxide include Sc, Ti, V, Cr, Mn, Fe, Co, Ni, Cu, Y, Zr, W, and the like. The lithium-containing transition metal oxide may contain one transition metal element, or two or more transition metal elements. The transition metal element may be Co, Ni and/or Mn. The lithium-containing transition metal oxide may contain one or more representative element as needed. Examples of the representative element include Mg, Al, Ca, Zn, Ga, Ge, Sn, Sb, Pb, Bi, and the like. The representative element may be Al or the like.

Out of lithium-containing transition metal oxides, from the viewpoint of obtaining a high capacity, it is preferable to use a composite oxide that contains Ni, and Co and/or Mn as transition metal elements, and Al as an optional component, and has a layered rock salt crystal structure. In the lithium secondary battery, a molar ratio mLi/mM that is a ratio of the total amount mLi of lithium contained in the positive electrode and the negative electrode and the amount mM of metal M other than lithium contained in the positive electrode may be set to, for example, 1.1 or less. In the case of a pin-type battery, the molar ratio mLi/mM may be set to 2.0 or less.

As the binder, the conductive material, and the like, for example, those listed in the description of the negative electrode can be used. The shape and the thickness of the positive electrode current collector can be selected as appropriate from the shapes and the thickness ranges of the positive electrode current collector.

As the material of the positive electrode current collector (conductive sheet), for example, a metal material such as Al, Ti, or Fe can be used. The metal material may be Al, an Al alloy, Ti, a Ti alloy, or an Fe alloy. The Fe alloy may be stainless steel (SUS).

The thickness of the positive electrode current collector is, but is not particularly limited to, for example, 5 µm or more and 300 µm or less.

### (Separator)

As the separator, a separator used in a lithium secondary battery or a lithium ion secondary battery can be used without a particular limitation. As the separator, an ion transmitting and insulating porous sheet can be used. Examples of the porous sheet include a porous film, a woven fabric, a non-woven fabric, and the like. The porous film may be a uniaxially or biaxially drawn sheet, or the like. The material of the porous sheet may be, but is not particularly limited to, a polymer material. Examples of the polymer material include a polyolefin resin, a polyamide resin, a polyimide resin, cellulose, and the like. Examples of the polyolefin resin include polyethylene, polypropylene, a copolymer of ethylene and propylene, and the like. The porous sheet may contain one material or two or more materials. The porous sheet may contain additives as needed. As the additives, an inorganic filler and the like can be used.

The thickness of the separator is not particularly limited, and can be selected as appropriate from a range of, for example, 5 µm or more and 300 µm or less. The thickness of the porous film is, for example, 5 µm or more and 50 µm or less.

The separator may include a heat resistant layer in a surface layer on at least one side. That is, the separator may include a substrate and a heat resistant layer. The heat resistant layer is formed on at least one selected from two main surfaces of the substrate. The heat resistant layer has insulating properties.

Due to the presence of the heat resistant layer, it is possible to suppress contraction of the substrate when the temperature of the electrode group increases excessively. When the substrate contracts, due to contraction of the substrate, a short circuit tends to occur between the positive electrode and the negative electrode, causing a further increase in the temperature of the electrode group. As a result of the separator including a heat resistant layer, the contraction of the substrate can be suppressed, and thus a further increase in the temperature of the electrode group can be suppressed.

As the substrate, a porous sheet as described above, or in other words, a separator used in a lithium secondary battery or a lithium ion secondary battery may be used. As the substrate, for example, a porous film that contains a polyolefin resin may also be used. It is desirable to use a polyolefin resin because it has excellent durability and functions to close pores when the battery temperature increases to a predetermined temperature (or in other words, a shut-down function). The substrate may have a single-layer structure, a double-layer structure, or a structure including three or more layers.

The heat resistant layer may contain inorganic particles (or an inorganic filler) and a polymer (or a macromolecule or a resin). The polymer causes the inorganic particles to bind to the substrate. It is desirable to use, as the polymer, a heat resistant resin that has heat resistance higher than that of a main component of the substrate. The heat resistant layer may contain inorganic particles as a main component (for example, 80 mass% or more) or a heat resistant resin as a main component (for example, 40 mass% or more). The heat resistant layer may contain only a heat resistant resin, without containing inorganic particles.

As the heat resistant resin, a polyamide resin, a polyimide resin, a polyamideimide resin or the like may be used. In particular, the heat resistant resin preferably contains at least one selected from the group consisting of an aromatic polyamide, an aromatic polyimide, and an aromatic polyamideimide. These are known as polymers that has particularly high heat resistance. From the viewpoint of heat resistance, it is preferable to use an aramid, or in other words, a meta-aramid (a meta-fully aromatic polyamide), and a para-aramid (a para-fully aromatic polyamide).

The inorganic particles are particles composed of an insulating inorganic compound. Examples of material of the inorganic particles include an oxide, an oxide hydrate, a hydroxide, a nitride, a carbide, a sulfide, and the like. These may contain a metal element.

Specific examples include aluminum oxide, boehmite, magnesium oxide, titanium oxide, zirconium oxide, silicon oxide, yttrium oxide, zinc oxide, silicon nitride, aluminum nitride, boron nitride, titanium nitride, silicon carbide, boron carbide, barium sulfate, aluminum hydroxide, and the like. Out of these, from the viewpoint of insulating properties, heat resistance, and the like, it is preferable to use at least one selected from the group consisting of aluminum oxide, boehmite, talc, titanium oxide, and magnesium oxide.

The inorganic particles may contain a lithium-containing phosphate. The lithium-containing phosphate may be at least one selected from the group consisting of lithium phosphate (Li₃PO₄), dilithium hydrogen phosphate (Li₂HPO₄), and lithium dihydrogen phosphate (LiH₂PO₄). Out of these, it is preferable to use lithium phosphate because the effect of suppressing heat generation in the battery when the battery is in an abnormal condition is high.

The average particle size of the inorganic particles may be, but is not particularly limited to, for example, 0.2 µm to 2 µm. The average particle size of the lithium-containing phosphate may be 0.1 µm to 1.0 µm or 0.1 µm to 0.5 µm. By adjusting the average particle size to 0.1 µm or more, it is possible to ensure pores sufficient for the non-aqueous electrolyte to permeate. By adjusting the average particle size to 1.0 µm or less, it is possible to form a heat resistant layer in which the lithium-containing phosphate is packed at a high density.

### (Non-Aqueous Electrolyte)

As the non-aqueous electrolyte, a lithium ion conductive non-aqueous electrolyte can be used. The non-aqueous electrolyte contains a solvent and an electrolyte salt that is dissolved in the solvent. The solvent contains an ether compound as a main component. The electrolyte salt contains at least a lithium salt. As a result of the lithium salt being dissolved in the solvent, lithium ions and anions are generated. The non-aqueous electrolyte may be in the form of a liquid, or the non-aqueous electrolyte in the form of a liquid may be gelled using a polymer that absorbs the solvent.

As the solvent, other than the ether compound, for example, an ester compound, a nitrile compound, an amide compound, or a halogen substituted form thereof may be used. The non-aqueous electrolyte may contain one or a combination of two or more of these non-aqueous solvents. The halogen substituted form may be a fluoride or the like.

Examples of the ester compound include a carbonic ester, a carboxylic ester, and the like. Example of a cyclic carbonic ester include ethylene carbonate, propylene carbonate, fluoroethylene carbonate (FEC), and the like. Examples of a chain carbonic ester include dimethyl carbonate (DMC), ethyl methyl carbonate (EMC), diethyl carbonate (DEC), and the like. Examples of a cyclic carboxylic ester include γ-butyrolactone, γ-valerolactone, and the like. Examples of a chain carboxylic ester include ethyl acetate, methyl propionate, fluoromethyl propionate, and the like.

Examples of the ether compound include a cyclic ether and a chain ether. In particular, it is desirable to use a first ether compound (non-fluorinated ether) represented by the following general formula (1):

R1-(OCH₂CH₂)ₙ-OR2,

where R1 and R2 each independently represent an alkyl group that has 1 to 5 carbon atoms, and n is 1 to 3.

The lowest unoccupied molecular orbital (LUMO) of the non-fluorinated ether is present at a high energy level. Accordingly, the non-fluorinated ether is unlikely to be reductively decomposed even when the non-fluorinated ether comes into contact with a lithium metal that has a strong reducing power. Furthermore, oxygen contained in the non-fluorinated ether backbone strongly interacts with lithium ions, and thus it can easily dissolve the lithium salt contained in the non-aqueous electrolyte as the electrolyte salt.

The non-fluorinated ether is suitable for use as a solvent for a non-aqueous electrolyte in a lithium secondary battery from the viewpoint of suppressing side reactions between the lithium metal and the non-aqueous electrolyte and enhancing the solubility of the lithium salt into the solvent.

Specific examples of the first ether compound (non-fluorinated ether) include 1,2-dimethoxyethane, 1,2-diethoxyethane, 1,2-dibutoxyethane, diethylene glycol dimethyl ether, diethylene glycol diethyl ether, diethylene glycol ethyl methyl ether, diethylene glycol dibutyl ether, triethylene glycol dimethyl ether, and the like. The first ether compounds may be used alone or in a combination of two or more.

The ether compound may contain a fluorinated ether. The interaction of the oxygen contained in the ether backbone of the fluorinated ether with the lithium ions is reduced as compared with that of the non-fluorinated ether. The reason is considered to be that, due to the strong electronegativity of fluorine atoms, whole electrons in a molecule are attracted to the inner core side, which reduces the orbital level of the non-shared electron pair of oxygen in the ether backbone that should otherwise interact with lithium ions.

Out of fluorinated ethers, it is desirable to use a second ether compound represented by the following general formula (2):

Cₐ₁H_{b1}F_{c1}O_{d1}(CF₂OCH₂)Cₐ₂H_{b2}F_{c2}O_{d2},

where a1 ≥ 1, a2 ≥ 0, b1 ≤ 2a1, b2 ≤ 2a2, c1 = (2a1 + 1) - b1, c2 = (2a2 + 1) - b2, d1 ≥ 0, and d2 ≥ 0.

As the ether compound, the fluorinated ether and the non-fluorinated ether may be used in combination. For example, in the case where the first ether compound and the second ether compound are used together, charge/discharge reactions proceed more homogeneously in the lithium secondary battery. The reason is considered to be that the solvation energy between the ether compound and the lithium ions are well balanced.

The fluorination rate of the second ether compound may be 60% or more. As used herein, the term "the fluorination rate of the second ether compound" refers to a ratio, expressed in percentage (%), of the number of fluorine atoms to the total number of fluorine atoms and hydrogen atoms contained in the second ether compound.

Specific examples of the second ether compound (fluorinated ether) include 1, 1,2,2-tetrafluoroethyl 2,2,2-trifluoroethyl ether, 1,1,2,2-tetrafluoroethyl 2,2,3,3-tetrafluoropropyl ether, and the like. These second ether compounds may be used alone or in a combination of two or more.

A ratio of the total amount of the first ether compound and the second ether compound in the entire solvent may be 80 volume% or more. When the ratio of the total amount of the first ether compound and the second ether compound in the entire solvent is 80 volume% or more, the effect of improving the cycle characteristics of the lithium secondary battery appears more remarkably.

A volume ratio V1/V2 of volumeV1 of the first ether compound to volume V2 of the second ether compound is preferably 1/0.5 to 1/4, and more preferably 1/0.5 to 1/2.

As the anion of the lithium salt, a known anion used in a non-aqueous electrolyte in a lithium secondary battery can be used. Specific examples include BF₄⁻, ClO₄⁻, PF₆⁻, CF₃SO₃⁻, CF₃CO₂⁻, an imide anion, an oxalate complex anion, and the like.

From the viewpoint of suppressing deposition of the lithium metal in the form of dendrites, the electrolyte salt may contain at least one selected from the group consisting of an imide anion, PF₆⁻ and an oxalate complex anion. Out of these, the oxalate complex anion tends to cause, due to the interaction with lithium, the lithium metal to uniformly deposit in the form of fine particles.

Examples of the imide anion include N(SO₂F)2⁻, N(SO₂CF₃)2⁻, N(CₘF_{2m+ 1}SO₂)ₓ(CₙF₂ₙ₊₁SO₂)_{y}⁻ (where m and n each independently represent 0 or an integer of 1 or more, and x and y each independently represent 0, 1, or 2, and satisfy x + y = 2), and the like. Out of these, it is preferable to use a bis(fluorosulfonyl) imide anion (N(SO₂F)₂⁻). Accordingly, it is desirable that the lithium salt contains lithium bis(fluorosulfonyl) imide (hereinafter also referred to as "LiFSI").

Examples of the oxalate complex anion include a bis(oxalate)borate anion, a difluoro(oxalate)borate anion (BF₂(C₂O₄)⁻), PF₄(C₂O₄)⁻, PF₂(C₂O₄)₂⁻, and the like. Out of these, it is preferable to use a difluoro(oxalate)borate anion (BF₂(C₂O₄)⁻). Accordingly, it is desirable that the lithium salt contains lithium difluoro(oxalate)borate (hereinafter also referred to as "LiFOB").

As described above, it is desirable that the electrolyte salt contains at least one selected from the group consisting of LiPF₆, an imide salt, and an oxalate complex salt. The concentration of the lithium salt in the non-aqueous electrolyte is, for example, 0.5 mol/L or more and 3.5 mol/L or less. The concentration of the oxalate complex salt in the non-aqueous electrolyte may be 0.05 mol/L or more and 1 mol/L or less.

Hereinafter, an example of a non-aqueous electrolyte secondary battery according to the present embodiment will be described specifically with reference to the drawings. The above-described constituent elements can be used as constituent elements included in the example of the non-aqueous electrolyte secondary battery described below. Also, the constituent elements included in the example of the non-aqueous electrolyte secondary battery described below can be changed based on the description given above. Also, the features described below may be applied to the above-described embodiment. Also, in the non-aqueous electrolyte secondary battery described below, constituent elements that are not essential to the non-aqueous electrolyte secondary battery according to the present disclosure may be omitted. In the diagrams referred to below, for the sake of ease of understanding, the scaling of the dimensions of constituent elements is changed.

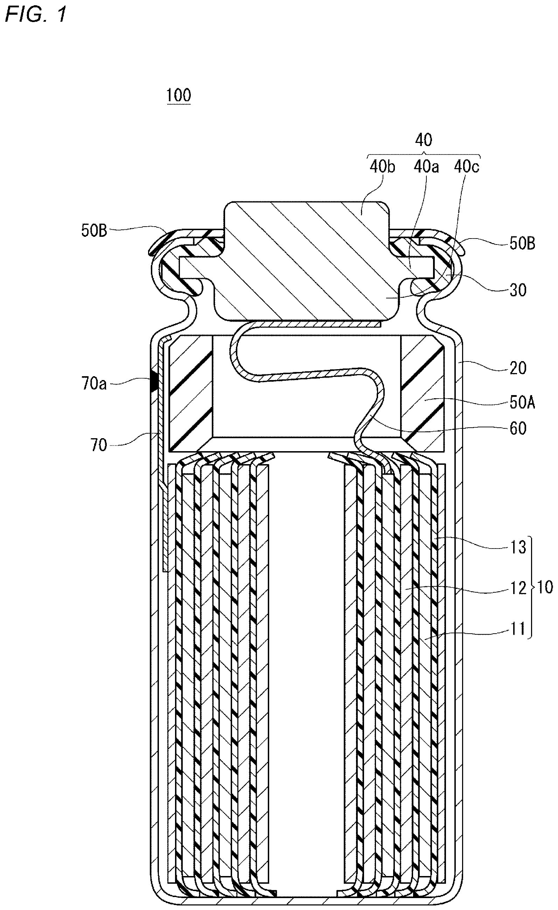

FIG. 1 is an overall vertical cross-sectional view of a pin-type non-aqueous electrolyte secondary battery (lithium secondary battery) according to an embodiment of the present disclosure. FIG. 2 is a schematic cross-sectional view of an example of a wound electrode group used in the non-aqueous electrolyte secondary battery (lithium secondary battery) shown in FIG. 1, showing, in particular, an end portion of the wound electrode group at winding start side.

A non-aqueous electrolyte secondary battery 100 includes a bottomed cylindrical battery case 20 that has an opening, a wound electrode group 10 that is housed in the battery case 20, a non-aqueous electrolyte (not shown), and a sealing member 40 that seals the opening of the battery case 20. The electrode group 10 is composed of a positive electrode 11, a negative electrode 12, and a separator 13 that is interposed therebetween.

The sealing member 40 is in the shape of a hat, and includes a ring-shaped flange (brim 40a), and cylindrical terminal portions 40b and 40c that protrude in the thickness direction from an inner circumference of the brim 40a. A ring-shaped insulating gasket 30 is placed on a circumferential edge portion of the sealing member 40 to cover the brim 40a. An opening end portion of the battery case 20 is bent inward and crimped onto the circumferential edge portion of the sealing member 40 via the gasket 30, as a result of which, the battery case 20 and the sealing member 40 are insulated from each other, and the battery case 20 is sealed.

There is a space between an upper end surface (top surface) of the electrode group 10 and a bottom surface of the sealing member 40. A first insulation ring 50Ais placed in the space to restrict contact between the electrode group 10 and the sealing member 40.

A donut-shaped second insulation ring 50B made of an electric insulating material is placed to cover an outer surface of the bent opening end portion of the battery case 20 and a surface of the gasket 30 in the vicinity thereof.

One end portion of a positive electrode current collector lead 60 is connected to the positive electrode 11 through welding or the like, and the other end portion of the positive electrode current collector lead 60 is connected to the bottom surface of the sealing member 40 through welding or the like via a hole formed at the center of the first insulation ring 50A. That is, the positive electrode 11 and the sealing member 40 are electrically connected via the positive electrode current collector lead 60, and the sealing member 40 functions as an external positive electrode terminal.

One end portion of a negative electrode current collector lead 70 is connected to the negative electrode 12 on an outermost circumferential portion side of the electrode group 10 through welding or the like. The other end portion of the negative electrode current collector lead 70 is connected to an inner wall of the battery case 20 at a welding point 70a. That is, the negative electrode 12 and the battery case 20 are electrically connected via the negative electrode current collector lead 70, and the battery case 20 functions as an external negative electrode terminal. The welding point 70a is formed, for example, on the inner wall of the battery case 20 on the opening side of the battery case 20 relative to the upper end surface of the electrode group 10.

The negative electrode 12 of the wound electrode group 10 includes a reverse winding portion 12A. As shown in FIG. 2, the negative electrode 12 is folded back at a folded-back position X shown in FIG. 2. A negative electrode portion located on the outer circumferential side relative to the folded-back position X is spirally wound clockwise, and at least a surface of the negative electrode portion on the outer circumferential side opposes the positive electrode 11 via the separator 13. On the other hand, a negative electrode portion located on the inner circumferential side relative to the folded-back position X is the reverse winding portion 12A. The reverse winding portion 12Ais a portion that extends from the winding start position O to the folded-back position X of the negative electrode, and is spirally wound, from the winding start position O, in a direction (counterclockwise) that is opposite to the winding direction of the positive electrode 11 (or in other words, reversely wound).

The reverse winding portion 12A does not oppose the positive electrode 11, but opposes the negative electrode 12. Accordingly, in the case where a negative electrode in which a negative electrode material mixture layer (for example, lithium ion absorbing layer) that contains a negative electrode active material is formed on a negative electrode current collector is used, the negative electrode current collector may be exposed at the reverse winding portion 12A, without the negative electrode material mixture layer being formed.

### [Examples]

Hereinafter, the present invention will be specifically described based on examples and comparative examples. However, the present invention is not limited to the examples given below.

In each of Examples and Comparative Examples given below, a cylindrical lithium secondary battery as shown in FIG. 1 was produced. The cylindrical lithium secondary battery was formed to have an outer diameter R of 4 mm and a height H of 25 mm.

### (Example 1)

### (1) Production of Positive Electrode 11

A positive electrode slurry was prepared by mixing 100 parts by mass of a lithium-containing transition metal oxide (NCA: positive electrode active material) containing Li, Ni, Co, and Al (with a molar ratio of Li relative to the total of Ni, Co, and Al being set to 1.0) and having a layered rock salt crystal structure, 4 parts by mass of acetylene black as a conductive material, 4 parts by mass of polyvinylidene fluoride (PVdF) as a binder, and N-methyl-2-pyrrolidone (NMP) added as a dispersing medium. The positive electrode slurry was applied to each surface of an aluminum foil (with a thickness of 15 µm) as a positive electrode current collector, and dried, and the whole was then compressed in the thickness direction to form a positive electrode 11 (with a thickness of 80 µm) including a positive electrode material mixture layer on each surface of the positive electrode current collector. When producing the positive electrode 11, an exposed portion of the positive electrode current collector was formed in the width direction (in a direction parallel to the winding axis of the electrode group) of the positive electrode, and one end portion of a ribbon-shaped positive electrode current collector lead 60 (with a width of 1.0 mm and a thickness of 0.05 mm) made of aluminum was connected to the exposed portion.

### (2) Production of Negative Electrode 12

A negative electrode 12 (with a thickness of 50 µm) was produced by attaching a 20 µm-thick lithium metal foil to each surface of a copper foil (with a thickness of 10 µm) as a negative electrode current collector. An exposed portion of the negative electrode current collector was formed in a portion corresponding to an outermost circumference of the negative electrode 12 of the electrode group 10, and one end portion of a ribbon-shaped negative electrode current collector lead 70 (with a width of 1.5 mm and a thickness of 0.05 mm) made of nickel was connected to the exposed portion.

### (3) Production of Electrode Group 10

The positive electrode 11 and the negative electrode 12 were spirally wound with a separator 13 interposed therebetween to form an electrode group 10.

A reverse winding portion 12A without a lithium metal foil being attached was formed at an end portion of the negative electrode 12 at starting side of winding, and the positive electrode 11 and the negative electrode 12 were placed on top of each other with the separator 13 interposed therebetween such that the reverse winding portion 12A did not overlap the positive electrode 11. The reverse winding portion 12A was spirally wound in a direction to oppose to the positive electrode 11, and then the positive electrode 11 and a portion of the negative electrode 12 other than the reverse winding portion were spirally wound in the opposite direction with the separator 13 interposed therebetween. In this way, an electrode group 10 with a winding start portion as shown in FIG. 2 was obtained.

The length of the reverse winding portion 12A was adjusted to a length corresponding to 0.75 laps of spiral winding. The electrode group 10 was fixed by attaching a piece of fixing insulation tape to a winding end portion of the electrode group. As the separator, a polyethylene porous film with a thickness of 16 µm was used.

### (4) Preparation of Non-Aqueous Electrolyte

Anon-aqueous electrolyte was prepared by dissolving LiFSI and LiFOB in a mixed solvent containing dimethoxyethane (DME) and 1,1,2,2-tetrafluoroethyl 2,2,3,3-tetrafluoropropyl ether (H(CF₂)₂CH₂O(CF₂)₂H) at a mass ratio of 25:75. At this time, the concentration of LiFSI in the non-aqueous electrolyte was adjusted to 1.0 mol/L, and the concentration of LiFOB in the non-aqueous electrolyte was adjusted to 0.05 mol/L.

### (5) Production of Cylindrical Lithium Secondary Battery 100

The electrode group 10 obtained in the step (3) described above was inserted into a bottomed cylindrical battery case 20 made of a nickel-plated iron plate and having an opening, and the other end portion of the negative electrode current collector lead 70 was welded to the inner wall of the battery case 20 at a welding point 70a. At the welding point 70a, a first insulation ring 50A was placed on top of the electrode group 10, and the other end portion of the positive electrode current collector lead 60 drawn out from the electrode group 10 was connected to the bottom surface of a sealing member 40 made of nickel-plated iron via the hole of the first insulation ring 50A. A ring-shaped insulating gasket 30 was attached to the circumferential edge portion of the sealing member 40. The non-aqueous electrolyte prepared in the step (4) described above was injected into the battery case 20 in an amount of 2.5 µL per 1 mAh of discharge capacity. The sealing member 40 was placed on the opening of the battery case 20, and the opening end portion of the battery case 20 was crimped onto the circumferential edge portion of the sealing member 40 via the gasket 30 to seal the opening of the battery case 20. A butyl rubber-based insulating coating material was applied in the form of a donut to cover the outer surface of the bent opening end portion of the battery case 20 and the surface of the gasket 30, and a second insulation ring 50B was thereby formed. In this way, a cylindrical lithium secondary battery 100 (battery A1) with a rated capacity of 45 mAh was obtained.

### (Comparative Example 1)

When producing the electrode group 10, the electrode group 10 was formed by spirally winding the positive electrode 11 and the negative electrode 12 with the separator 13 interposed therebetween, without the reverse winding portion 12A being formed in the negative electrode 12.

A cylindrical lithium secondary battery (battery B1) was produced in the same manner as in Example 1, except for the above-described difference.

### (Example 2)

When producing the negative electrode, a negative electrode slurry was prepared by mixing a negative electrode active material prepared by mixing silicon oxide (SiO) particles having a conductive layer and graphite at a mass ratio of 10:90, sodium carboxymethyl cellulose (CMC-Na), styrene butadiene rubber (SBR), and a lithium polyacrylate at a mass ratio of 96.5:1:1.5:1, with water added as a dispersing medium. The negative electrode slurry was applied to each surface of a copper foil (with a thickness of 10 µm) as a negative electrode current collector, and the whole was then dried and compressed in the thickness direction to obtain a negative electrode 12 including a negative electrode material mixture layer on each surface of the negative electrode current collector. However, in the negative electrode 12, the negative electrode slurry was not applied to a region corresponding to the reverse winding portion 12A to expose the negative electrode current collector.

When preparing the non-aqueous electrolyte, the non-aqueous electrolyte was obtained by dissolving LiPF₆ at a concentration of 1.0 mol/L in a mixed solvent containing ethylene carbonate (EC) and diethyl carbonate (DEC) at a mass ratio of 30:70.

A cylindrical lithium ion secondary battery (battery A2) was produced in the same manner as in Example 1, except for the above-described differences.

### (Comparative Example 2)

When producing the electrode group 10, the electrode group 10 was formed by spirally winding the positive electrode 11 and the negative electrode 12 with the separator 13 interposed therebetween, without the reverse winding portion 12A being formed in the negative electrode 12.

A cylindrical lithium ion secondary battery (battery B2) was produced in the same manner as in Example 2, except for the above-described difference.

### (Evaluation)

For each of the batteries produced in Examples and Comparative Examples, capacity retention rate (at the 100th cycle) and negative electrode expansion rate were determined in the following procedures.

### (Capacity Retention Rate)

Each battery was charged at a constant current of 0.1 It until the closed circuit voltage of the battery reached 4.2 V, and then charged at a constant voltage of 4.2 V until the current value reached 0.05 It. After that, with an interval of 20 minutes, the battery was discharged at a constant current of 0.1 It until the closed circuit voltage of the battery reached 3.0 V This cycle was repeated 100 times. The ratio (%) of the discharge capacity at the 100th cycle to the discharge capacity at the first cycle was defined as capacity retention rate.

### (Negative Electrode Expansion Rate)

For each battery, two battery samples were produced. One of the battery samples was charged at a constant current of 0.1 It until the closed circuit voltage reached 4.2 V (SOC 100%), and then charged at a constant voltage of 4.2 V until the current value reached 0.05 It. The charged battery sample was disassembled, and the negative electrode was taken out therefrom. Then, negative electrode thickness T1 was determined based on the method described above.

The other battery sample was discharged at a constant current of 0.1 It until the closed circuit voltage reached 3.0 V (SOC 0%). The discharged battery sample was disassembled, and the negative electrode was taken out therefrom. Then, negative electrode thickness T0 was determined based on the method described above. (T1/T0) × 100 was evaluated as negative electrode expansion rate (%).

The evaluation results of capacity retention rate and negative electrode expansion rate obtained in Examples and Comparative Examples are shown in Table 1.

**[Table 1]**

| Battery | Reverse winding portion | Negative electrode expansion rate (%) | Capacity retention rate (%) |
|---|---|---|---|
| A1 | Formed | 140 | 97.5 |
| B1 | Not formed | 140 | 96.4 |
| A2 | Formed | 120 | 98.0 |
| B2 | Not formed | 120 | 96.6 |

As shown in Table 1, the batteries A1 and B 1 exhibited a negative electrode expansion rate of 140%. Accordingly, the batteries A1 and B1 are batteries that are likely to undergo electrode deformation by expansion of the negative electrode and the battery performance is likely to be reduced due to the electrode deformation. However, the capacity retention rate of the battery A1 was improved as compared with that of the battery B1. The reason is considered to be that, as a result of the reverse winding portion being formed in the battery A1, the electrode deformation caused by expansion of the negative electrode was suppressed, and the reduction of the battery performance caused by the electrode deformation was suppressed, and thus the capacity retention rate was maintained at a high level.

When the batteries A2 and B2 that exhibited a negative electrode expansion rate of 120% are compared, the capacity retention rate of the battery A2 was improved as compared with that of the battery B2. The reason is also considered to be that, as with the battery A1, as a result of the reverse winding portion being formed in the battery A2, the electrode deformation caused by expansion of the negative electrode was suppressed.

### [Industrial Applicability]

The present disclosure is suitable for a cylindrical lithium secondary battery (in particular, a pin-type secondary battery), and can be suitably used as a power supply included in various types of portable electronic devices that require a small-sized power supply such as, for example, glasses (3D glasses and the like), a hearing aid, a stylus pen, and a wearable terminal.

The present invention has been described in terms of a presently preferred embodiment, but the disclosure should not be interpreted as limiting. Various alterations and modifications will no doubt become apparent to those skilled in the art to which the present invention pertains, after having read the disclosure. Accordingly, it is to be understood that the appended claims be interpreted as covering all alterations and modifications which fall within the true spirit and scope of the present invention.

### [Reference Signs List]

10: wound electrode group
11: positive electrode
12: negative electrode
12A: reverse winding portion
13: separator
20: battery case
30: gasket
40: sealing member
40a: brim
40b, 40c: terminal portion
50A: first insulation ring
50B: second insulation ring
60: positive electrode current collector lead
70: negative electrode current collector lead
70a: welding point
100: cylindrical secondary battery

## Claims

1. Anon-aqueous electrolyte secondary battery comprising:
a wound electrode group in which a positive electrode and a negative electrode are spirally wound in a winding direction with a separator interposed therebetween; and
a non-aqueous electrolyte,
wherein the negative electrode includes a reverse winding portion at an end portion of the wound electrode group at a starting side of winding, the reverse winding portion being a portion that does not oppose the positive electrode and is spirally wound in a direction opposite to the winding direction.

2. The non-aqueous electrolyte secondary battery in accordance with claim 1,
wherein the reverse winding portion is spirally wound 0.5 laps or more and 1.25 laps or less in the direction opposite to the winding direction.

3. The non-aqueous electrolyte secondary battery in accordance with claim 1 or 2,
wherein an expansion rate represented by a ratio of a thickness of the negative electrode in a state in which SOC is 100% to a thickness of the negative electrode in a state in which SOC is 0% is 108% or more.

4. The non-aqueous electrolyte secondary battery in accordance with claim 3,
wherein the expansion rate is 120% or more.

5. The non-aqueous electrolyte secondary battery in accordance with claim 3,
wherein the expansion rate is 140% or more.

6. The non-aqueous electrolyte secondary battery in accordance with any one of claims 1 to 5,
wherein the wound electrode group has an inner diameter of 5 mm or less.

7. The non-aqueous electrolyte secondary battery in accordance with claim 6,
wherein the inner diameter is 2.5 mm or less.

8. The non-aqueous electrolyte secondary battery in accordance with any one of claims 1 to 7,
wherein a lithium metal deposits on the negative electrode during charge, and the lithium metal dissolves into the non-aqueous electrolyte during discharge.
